(19) Europäisches Patentamt / European Patent Office / Office européen des brevets

(11) **EP 4 023 074 B1**

(12) **EUROPEAN PATENT SPECIFICATION**

(45) Date of publication and mention of the grant of the patent:
**31.12.2025 Bulletin 2026/01**

(21) Application number: **19942768.3**

(22) Date of filing: **30.08.2019**

(51) International Patent Classification (IPC):
*A23L 2/38* $^{(2021.01)}$    *A23L 2/02* $^{(2006.01)}$
*A23L 2/385* $^{(2006.01)}$    *A23L 2/52* $^{(2006.01)}$
*A23L 2/68* $^{(2006.01)}$    *C12J 1/00* $^{(2006.01)}$

(52) Cooperative Patent Classification (CPC):
**C12J 1/00; A23L 2/385; A23L 2/52; A23L 2/68**

(86) International application number:
**PCT/JP2019/034303**

(87) International publication number:
**WO 2021/038885 (04.03.2021 Gazette 2021/09)**

(54) **MALIC-ACID-CONTAINING BEVERAGE, METHOD FOR PRODUCING SAME, AND METHOD FOR IMPARTING RIPE FLAVOR/AROMA TO MALIC-ACID-CONTAINING BEVERAGE**

APFELSÄUREHALTIGES GETRÄNK, VERFAHREN ZU SEINER HERSTELLUNG UND VERFAHREN ZUM VERLEIHEN VON REIFEM GESCHMACK/AROMA FÜR EIN APFELSÄUREHALTIGES GETRÄNK

BOISSON CONTENANT DE L'ACIDE MALIQUE, SON PROCÉDÉ DE PRODUCTION ET PROCÉDÉ POUR CONFÉRER UNE SAVEUR/UN ARÔME DE CÉRÉALES À UNE BOISSON CONTENANT DE L'ACIDE MALIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**06.07.2022 Bulletin 2022/27**

(73) Proprietors:
• **Mizkan Holdings Co., Ltd.**
**Handa-shi, Aichi 475-8585 (JP)**
• **Mizkan Euro Ltd.**
**London, Greater London W4 5XS (GB)**

(72) Inventor: **STANDING, Ellie**
**London, W4 5XS (GB)**

(74) Representative: **Mewburn Ellis LLP**
**Aurora Building**
**Counterslip**
**Bristol BS1 6BX (GB)**

(56) References cited:
**WO-A1-2013/011754**    **CN-A- 109 090 390**
**JP-A- 2011 097 873**    **JP-A- 2013 021 926**

**JP-A- 2019 129 806**    **JP-A- S62 107 781**
**JP-A- S62 107 781**

• **THE HOURGLASS LIFE:** "Apple Cider Vinegar With Apple Juice....Healthy Can Feel And Taste Good", 10 March 2014 (2014-03-10), XP093032830, Retrieved from the Internet <URL:https://www.youtube.com/watch?v=iTgyJrxMfzo> [retrieved on 20230320]
• **RODRIGUEZ MADRERA R ET AL:** "Effect of cider maturation on the chemical and sensory characteristics of fresh cider spirits", FOOD RESEARCH INTERNATIONAL, ELSEVIER, AMSTERDAM, NL, vol. 43, no. 1, 2010, pages 70 - 78, XP026813700, ISSN: 0963-9969, [retrieved on 20090827]
• **ANONYMOUS:** "4-ethyl guaiacol 2785-89-9", 20 March 2016 (2016-03-20), pages 1 - 28, XP093029884, Retrieved from the Internet <URL:https://web.archive.org/web/20160320235255/http://www.thegoodscentscompany.com/data/rw1028451.html> [retrieved on 20230308]

   **(Cont. next page)**

- THE HOURGLASS LIFE: "Apple Cider Vinegar With Apple Juice....Healthy Can Feel And Taste Good", 10 March 2014 (2014-03-10), XP93032830, Retrieved from the Internet <URL:https://www.youtube.com/watch?v=iTgyJrxMfzo> [retrieved on 20230320]
- MADRERA R.R. ET AL.: "Effect of cider maturation on the chemical and sensory characteristics of fresh cider spirits", FOOD RESEARCH INTERNATIONAL, vol. 43, 2010, pages 70 - 78, XP026813700

Remarks:
The file contains technical information submitted after the application was filed and not included in this specification

## EP 4 023 074 B1

**Description**

### TECHNICAL FIELD

The present invention relates to beverage containing apple cider vinegar, and a method for producing the same.

### BACKGROUND ART

Vinegar is a typical seasoning that imparts sourness to foods, but its unique sourness makes it difficult to consume in large quantities through cooking alone. On the other hand, its functional ingredient, i.e., acetic acid, has recently been reported to have health functions such as lowering blood pressure and internal fat, and is increasingly consumed not only as a seasoning but also as a vinegar-containing beverage.

Apple cider vinegar is the most widely used vinegar used in vinegar-containing beverages because of its pleasant taste. CN109090390A (Patent Literature 3) discloses a xylitol cider vinegar beverage. Non-Patent Literature 1 discloses a beverage containing apple cider vinegar and apple juice. Non-Patent Literature 2 studies the effect of cider maturation on the chemical and sensory characteristics of fresh cider spirits. However, apple cider vinegar has a relatively high concentration of acetic acid, and there is a need to provide highly palatable beverages containing apple cider vinegar that can fully exhibit the refreshing sourness of acetic acid while reducing the acetic acid's throat irritation to improve taste.

JP 2017-184696 A (Patent Literature 1) discloses a method for providing a highly palatable beverage composition without causing stimulus resulting from vinegar or salt by incorporating predetermined amounts of vinegar and sodium.

JP 2009-240299 A (Patent Literature 2) discloses a method for reducing acidity and pungent odor caused by acetic acid in a beverage which contain 0.1 to 0.3 mass % of acetic acid and is packaged for heated sale, by adjusting the acetic acid content to the total organic acid content in the beverage to a mass ratio of 0.9 or less.

WO2013/011754A1 (Patent Literature 4) discloses an agent for reducing acid taste and/or acid smell, which comprises 4,7-tridecadienal and/or 2,4,7-tridecatrienal, to be added to a food or a drink having an acid taste and/or an acid smell.

JPS62-107781A (Patent Literature 5) discloses a vinegar drink comprising: a vinegar such as apple vinegar, prune vinegar, unpolished rice vinegar and adley vinegar wherein the amount of each vinegar is $\geq$10 vol% and the sum of apple vinegar and prune vinegar is $\geq$70 vol% taking the sum of the vinegars as 100 vol%; a sweetener in an amount to attain a sweetness of 8-12 deg., 0.1-2.0 wt% aloe juice based on the vinegar drink; an organic acid for food; an organic acid salt or carbonate for food; and water, and having the pH of the mixture to 3.5-4.0.

Non-Patent Literature 3 discloses 4-ethyl guaiacol (2-methoxy-4-ethylphenol) as a common flavoring agent.

However, although these conventional technologies alleviate the throat irritation of acetic acid, they do not provide a refreshing acetic acid taste, and there is room for improvement in terms of palatability.

### LIST OF CITATIONS

Patent Literature

[Patent Literature 1] JP2017-184696A
[Patent Literature 2] JP2009-240299A
[Patent Literature 3] CN109090390A
[Patent Literature 4] WO2013/011754A1
[Patent Literature 5] JPS62-107781A

Non-Patent Literature

[Non-Patent Literature 1] The Hourglass Life: "Apple Cider Vinegar With Apple Juice... Healthy Can Feel and Taste Good. URL: https://www.youtube.com/watch?v=iTgyJrxMfzo [retrieved on 2023-03-20]
[Non-Patent Literature 2] Rodriguez Madrera R et al., "Effect of cider maturation on the chemical and sensory characteristics of fresh cider spirits", Food Research International, vol. 43, no. 1, 2010, pp. 70-78
[Non-Patent Literature 3] "4-ethyl guaiacol 2785-89-9". URL: https://web.archive.org/web/20160320235255/http://www.thegoodscentscompany.com/data/r w1028451.html [retrieved on 2023-03-08]

## SUMMARY OF INVENTION

### PROBLEM TO BE SOLVED BY THE INVENTION

An objective of the present invention is to provide a technique to mitigate throat irritation caused by acetic acid in beverages containing apple cider vinegar, while at the same time providing a refreshing acetic acid sourness and imparting a mellow taste/aroma of matured apple.

### MEANS TO SOLVE THE PROBLEM

As a result of various examinations, the inventors have found that it is possible to prepare a beverage containing apple cider vinegar with alleviating throat irritation due to acetic acid while enhancing a refreshing acetic acid sourness and a mellow taste/aroma of matured apple, by the simple means of incorporating into the beverage 2-methoxy-4-ethylphenol and diethyl succinate in specific concentration ranges.

The phrase "mellow taste/aroma of matured apple" herein refers to the taste and aroma reminiscent of processed products of matured apple (apple jam, apple pie, etc.), which is produced by the synergistic effect of the mellow fruity aroma of apple with various components resulting from the unique fermentation process of apple cider vinegar. The phrase "alleviating throat irritation due to acetic acid" herein refers to a state in which not only the throat irritation of acetic acid is mitigated, but the refreshing acetic acid sourness derived from apple cider vinegar is fully felt.

Specifically, the present invention is defined in the appended claims.

### ADVANTAGEOUS EFFECTS OF INVENTION

According to the present invention, a beverage containing apple cider vinegar with a relatively high concentration of acetic acid is provided wherein not only is throat irritation caused by acetic acid alleviated, but the mellow matured taste/aroma and good acidity of apple are also enhanced.

### DESCRIPTION OF EMBODIMENTS

The present invention will now be described based on specific embodiments. These embodiments should not be construed to limit the scope of the invention.

[Apple cider vinegar]

The beverage according to the present invention contains apple cider vinegar.

The apple cider vinegar to be used in the present invention is not particularly limited, but may preferably be apple cider vinegar produced through acetic acid fermentation. In terms of consistency of quality, the method of producing apple cider vinegar by fermentation may preferably comply with the method of producing cider vinegar described in British Standard BS EN 13188:2000 2.3.3 or the method of producing apple cider vinegar described in the Japanese Agricultural and Forestry Standard for brewed vinegar. The raw materials for the apple cider vinegar used in the present invention are not particularly limited, and may be inorganic salts which can serve as a nutrient source for acetic acid bacteria fermentation, such as phosphate and ammonium salts, and various sugars including honey, sugar, and syrup, as well as various food additives.

The apple cider vinegar to be used in the present invention can be produced by conventional methods. When fermentative methods are used, the acetic acid fermentation method to be used may be any method such as surface fermentation using wooden vats, deep fermentation, or filled tower fermentation. When synthetic means is used, an example of the method to be used may involve adding apple juice to chemically-synthesized glacial acetic acid. Among these, apple cider vinegar produced by fermentative means may be preferred for the present invention, since it can contain a variety of components derived from acetic acid fermentation. Apple cider vinegar obtained from fermentation is used without any filtration process to remove the acetic acid bacteria used in the fermentation, i.e., with the acetic acid bacteria still contained, since a natural cloudy appearance can be thereby obtained.

[Apple juice]

The beverage according to the present invention may preferably contain apple juice in addition to apple cider vinegar.

When the beverage according to the present invention contains apple juice, the mass ratio of apple juice to apple cider vinegar in the beverage according to the present invention is not particularly restricted, but from the viewpoint of containing mellow apple-derived flavor, the amount of apple juice may preferably be 1.0 times or more than apple cider vinegar, more preferably 1.2 times or more. From the viewpoint of harmonizing the sourness of apple cider vinegar and apple flavor, the apple juice content may preferably be 5.0 times or less than apple cider vinegar, more preferably 4.0 times or less. When the mass ratio of this parameter is calculated, the calculation may be carried out based solely on the mass ratio of apple cider vinegar to apple juice, while the concentration ratio of apple juice needs not be taken into consideration.

The apple juice to be used in the present invention is not particularly limited, and may be either non-concentrated straight juice or concentrated juice. When concentrated apple juice is used, the concentrated apple juice may preferably comply with the Japanese Agricultural Standards for Fruit Beverages. In the present invention, the concentration ratio of apple juice can be converted with respect to apple juice equivalent to Brix 10 as 1.0, in conformity with the regulations for concentrated apple juice prescribed in the Japanese Agricultural Standards. When concentrated apple juice is used, the apple juice is not particularly limited in terms of its type, but may preferably contain cloudy juice with insoluble solids (hereinafter also may be referred to as "pulp content") derived from apple dietary fiber to provide the beverage with its natural turbidity. The pulp content (% (w/w)) in concentrated fruit juice is determined as follows: 1.0 g of concentrated juice is dispensed into a 1.5-mL Eppendorf tube and centrifuged at 15,000 rpm for 5 minutes, and the wet mass of the residue excluding the supernatant is measured.

[Acetic acid acidity]

The beverage according to the present invention has an acetic acid acidity within a specified range. Specifically, the acetic acid acidity of the beverage according to the present invention is 0.20% (w/v) or higher, preferably 0.25% (w/v) or more. If the acetic acid acidity is less than the lower limit mentioned above, the desired acidity originating from acetic acid may not be fully appreciated, and sweetness may linger. On the other hand, the acetic acid acidity of the beverage according to the present invention is 1.0% (w/v) or less, preferably 0.80% (w/v) or less. If the acetic acid acidity is higher than the upper limit mentioned above, the alleviation of the throat irritation due to acetic acid by various apple-derived ingredients may not sufficiently be achieved.

In the present invention, acetic acid acidity is measured in accordance with the Japanese Agricultural Standards for brewed vinegar. Specifically, the sample is titrated with sodium hydroxide solution, and the acidity is calculated from the amount of sodium hydroxide solution consumed to reach pH 8.2, using acetic acid as the reference for conversion. The titration method can be carried out either manually or using an automatic titrator. It should be noted that since the calculation method mentioned above is used, the acetic acid acidity calculated herein is based only on acetic acid but also on other organic acids such as citric acid as converted as acetic acid.

[Specific ingredient]

In addition to containing apple cider vinegar and having a predetermined acetic acid acidity, the beverage according to the present invention is also characterized by containing 2-methoxy-4-ethylphenol and diethyl succinate each at a predetermined ratio. The beverage according to the present invention may preferably contain 6-methyl-5-hepten-2-one at a predetermined ratio. In the present application, 2-methoxy-4-ethylphenol and diethyl succinate, as well as 6-methyl-5-hepten-2-one optionally used, may collectively be referred to as "specific ingredients.

The content of 2-methoxy-4-ethylphenol in the beverage according to the present invention is 4 $\mu$g/ L or more, preferably 6 $\mu$g/L or more. If the content of 2-methoxy-4-ethylphenol is less than the lower limit mentioned above, the throat irritation of acetic acid may not be fully suppressed, and a sense of maturity may not be sufficiently imparted. On the other hand, the content of 2-methoxy-4-ethylphenol according to the present invention is 50 $\mu$g/L or less, preferably 30 $\mu$g/L or less, more preferably 25 $\mu$g/L or less. If the content of 2-methoxy-4-ethylphenol exceeds the upper limit mentioned above, not only the throat irritation due to acetic acid but also the desirable flavor of apple may be suppressed, possibly resulting in an unpleasant taste.

The content of diethyl succinate in the beverage according to the present invention is 60 $\mu$g/L or more, preferably 65 $\mu$g/L or more. If the content of diethyl succinate is less than the lower limit mentioned above, the sense of sake fermentation may not be sufficiently imparted. On the other hand, the content of diethyl succinate in the beverage according to the present invention is 500 $\mu$g/L or less, preferably 300 $\mu$g/L or less, more preferably 100 $\mu$g/L or less. If the content of diethyl succinate exceeds the upper limit mentioned above, not only the throat irritation due to acetic acid but also the desirable flavor of apple may be suppressed, possibly resulting in an unpleasant taste.

The ratio (y/x) of the 2-methoxy-4-ethyl phenol content (y) to the diethyl succinate content (x) in the beverage according to the present invention is 1.0 or more, preferably 2.0 or more. If the ratio (y/x) is lower than the lower limit mentioned above, the content of diethyl succinate may be too high compared to the content of 2-methoxy-4-ethylphenol, and may counteract the effect of 2-methoxy-4-ethylphenol in imparting a sense of maturity. On the other hand, the ratio (y/x) is 15 or less, preferably 11 or less. If the ratio (y/x) exceeds the upper limit mentioned above, the content of 2-methoxy-4-ethylphenol may be too high compared to the content of diethyl succinate, and may cancel out the effect of diethyl succinate in imparting a sense of fermentation.

When the beverage according to the present invention contains 6-methyl-5-hepten-2-one, its content may preferably be 0.5 μg/L or more, more preferably 0.6 μg/L or more. If the 6-methyl-5-hepten-2-one content is lower than the lower limit mentioned above, the mellow fruit flavor may not be sufficiently imparted as to distribute throughout the beverage. On the other hand, when the beverage according to the present invention contains 6-methyl-5-hepten-2-one, its content may preferably be 10 μg/L or less, more preferably 5 μg/L or less. If the 6-methyl-5-hepten-2-one content exceeds the upper limit mentioned above, the aroma of 6-methyl-5-hepten-2-one may become perceptible and cause discomfort flavor.

When the beverage according to the present invention contains 6-methyl-5-hepten-2-one, the 2-methoxy-4-ethyl phenol content (x) and the 6-methyl-5-hepten-2-one content (z) may preferably satisfy the formula mentioned below.
[Formula 1]

$$x/(z \cdot 10) \qquad \text{Formula 1}$$

Specifically, the value of Formula 1 may preferably be 0.1 or more, more preferably 0.5 or more. If the value of Formula 1 is lower than the lower limit mentioned above, the content of 6-methyl-5-hepten-2-one may be too high compared to the content of 2-methoxy-4-ethyl phenol, and may counteract the effect of 2-methoxy-4-ethylphenol in imparting a sense of maturity. On the other hand, the value of Formula 1 may preferably be 10 or less, more preferably 5 or less. If the value of Formula 1 exceeds the upper limit mentioned above, the content of 6-methyl-5-hepten-2-one may be too low compared to the content of 2-methoxy-4-ethyl phenol, and may render the natural sweet flavor of apple difficult to be felt.

The method of including the specific ingredients (2-methoxy-4-ethylphenol and diethyl succinate, as well as 6-methyl-5-hepten-2-one optionally used) in the beverage according to the present invention may include: adding these specific ingredients to the beverage directly as pure substances or as materials containing these specific ingredients: and produce these specific ingredients through fermentation during beverage production.

The specific ingredients may be added to the beverage as pure substances. However, these specific ingredients may preferably be introduced in the form of apple cider vinegar or apple juice, especially as apple cider vinegar that has been produced by fermentative means and thereby include the specific ingredients, since this method also allows for inclusion of other aroma components involved in the matured feel at the same time.

In the present invention, the concentration of each specific ingredient in a beverage may be measured using a gas chromatography/mass spectrometry (GC/MS) instrument on a sample processed by the stir bar extraction (SBSE) method.

[Sugars]

The beverage according to the present invention typically contains sugars. The types and contents of sugars are arbitrary and not particularly limited, but the total content of fructose, glucose, and sucrose in the beverage may preferably be within a specified range. In the present specification, fructose, glucose, and sucrose may collectively be referred to as "specific sugars."

Specifically, the total content of specific sugars in the beverage according to the present invention may preferably be 2.5g/100 mL or more, more preferably 3.0g/100 mL or more. If the total content of specific sugars is less than the lower limit mentioned above, the throat irritation due to acetic acid may not sufficiently be alleviated. On the other hand, the total content of specific sugars in the beverage according to the present invention may preferably be 6.0g/100 mL or less, more preferably 5.6g/100 mL or less. If the total content of specific sugars exceeds the upper limit mentioned above, the resulting beverage may become too sweet and sticky.

The ratio (β/α) of the total content of specific sugars (β) to the acetic acid acidity (α) in the beverage according to the present invention is not particularly limited, but may preferably be 5 or more, more preferably 5.5 or more. If the β/α value is less than the lower limit mentioned above, the resulting beverage may be too acidic and out of balance with sweetness, resulting in throat irritation. On the other hand, the β/α value may preferably be 12 or less, more preferably 9 or less. If the β/α value exceeds the upper limit mentioned above, the resulting beverage may become too sweet and exhibit an undesired aftertaste.

The sugars in the beverage according to the present invention may be derived from apple cider vinegar and/or apple juice, or from a sweetener. When the beverage according to the present invention contains a sweetener, the sweetener to be used is not restricted in terms of its type, and may be either a carbohydrate sweetener such as glucose, fructose, sucrose, or maltose, or a non-carbohydrate sweetener such as sucralose, stevia, saccharin, or aspartame. However, it may be preferable not to use a non-sugar sweetener whenever possible, since otherwise it may interfere with the natural sweetness derived from apple.

In the present invention, the method of measuring the contents of various sugars including specific sugars (fructose, glucose, and sucrose) is not restricted, and may be any method so long as it can measure the contents of individual sugars separately. Examples of such measurement methods include high-performance liquid chromatography (HPLC).

[Other ingredients]

In addition to the ingredients listed above, the beverage according to the present invention may contain other ingredients so long as they do not interfere with the aforementioned effects. Examples of such other ingredients include plant-derived ingredients such as spices and herbs, flavors, amino acid seasonings, nucleic acid seasonings, organic acid seasonings, flavor ingredients, flavor enhancers, flavor enhancers, spice extracts and other taste and flavor components, viscosity adjusters, stabilizers, pH adjusters, coloring agents, etc. When these ingredients are included in the beverage according to the present invention, their contents are not limited and may be determined according to their uses.

However, the content of other ingredients than the ingredients listed above in the beverage according to the present invention may preferably be a predetermined limit or less. Specifically, the content of ingredients other than water, apple cider vinegar, and apple juice in the beverage according to the present invention may preferably be 10% (w/v) or less, more preferably 5% (w/v) or less, even more preferably 1% (w/v) or less. Adjusting the content of these other ingredients to within the range mentioned above may serve to more easily obtain a beverage with a good taste and sufficient apple flavor.

[Turbidity]

The turbidity the beverage according to the present invention is not particularly restricted, but may be within a predetermined range. Specifically, the turbidity of the beverage according to the present invention may preferably be 0.10 or more, more preferably 0.13 or more. If the turbidity of the beverage is less than the lower limit mentioned above, the appearance of the resulting beverage may not have a natural apple-derived coloration. On the other hand, the turbidity of the beverage according to the present invention is preferably 0.5 or less, more preferably 0.3 or less. If the turbidity of the beverage exceeds the upper limit mentioned above, the resulting beverage may be too thick to be aesthetically pleasing in appearance.

In the present invention, the turbidity of a beverage is represented by the absorbance at a wavelength of 660 nm, which can be measured with a common UV-visible-near-infrared absorbance spectrophotometer. An example of a UV-visible-near-infrared absorbance spectrophotometer may be UV-1800 (Shimadzu Corporation).

[Particle size distribution]

The particle size distribution of the beverage according to the present invention is arbitrary and not particularly restricted, but may preferably satisfy at least one, more preferably two or more, of the following conditions. Adjusting the particle size distribution of the beverage to satisfy any of the following requirements may serve to more efficiently obtain a beverage with an appropriate appearance typical of apple beverages and a good throat feel.

The accumulated 10% particle diameter (d10) of the particles contained in the beverage according to the present invention may preferably be 0.1 $\mu$m or more, more preferably 0.3 $\mu$m or more. If the d10 value is lower than the lower limit mentioned above, particles in the beverage may stick to the tongue and cause uncomfortable feel. On the other hand, the d10 value may preferably be 10 $\mu$m or less, more preferably 5.0 $\mu$m or less. If the d10 value exceeds the upper limit mentioned above, the reduction of throat irritation may adversely be affected when drinking.

The accumulated 90% particle diameter (d90) of the particles contained in the beverage according to the present invention may preferably be 100 $\mu$m or more, more preferably 120 $\mu$m or more. If the d90 is lower than the lower limit mentioned above, natural cloudiness may not be obtained. On the other hand, the d90 value may preferably be 300 $\mu$m or less, more preferably 250 $\mu$m or less. If the d90 value exceeds the upper limit mentioned above, the particles contained in the beverage may be so large as to affect the smooth sensation when drinking.

The ratio (d90/d10) of the accumulated 90% particle diameter (d90) to the accumulated 10% particle diameter (d10) of the particles contained in the beverage according to the present invention may preferably be 20 or more, more preferably 25 or more. If the d90/d10 ratio is less than the lower limit mentioned above, the overall particles may be too small to achieve a natural white cloudiness. On the other hand, the d90/d10 ratio may preferably be 1000 or less, more preferably 400 or less. If the d90/d10 ratio exceeds the upper limit mentioned above, the overall particles may be so large as to result in a rough appearance.

The accumulated 10% particle diameter (d10) and the accumulated 90% particle diameter (d90) are the particle diameters corresponding to the 10th and 90th percentiles, respectively, from the smallest particle diameter side on a cumulative distribution curve of the sample drawn on a volume basis.

In the present invention, particle size distribution is measured using a laser diffraction particle size analyzer. Specifically, water is used as the solvent for measurement, and the sample is subjected to sonication before measurement.

The Microtrac MT3300 EXII system manufactured by Microtrac Bell, for example, can be used as a laser diffraction particle size analyzer. DMS2 (Data Management System version 2, Microtrac Bell), for example, can be used as the measurement application software. For measurement, washing is performed by pressing the washing button in the measurement application software, zeroing is performed by pressing the Setzero button in the same software, and the sample is directly fed in until it reaches the appropriate concentration range in the sample loading feature. After adjustment, ultrasonication is performed for 3 minutes by pressing the ultrasonication button in the software, with a frequency of 40 kHz and an output of 40 W, followed by de-aeration treatment three times. After sonication, the sample loading process is performed again to confirm that the concentration is in the proper range. Immediately thereafter, laser diffraction measurement is performed with a measurement time of 10 seconds at a flow velocity of 60%, and the obtained result can be used as the measurement value. The measurement conditions may be set as follows: Distribution display: volume; Particle refractive index: 1.60; Solvent refractive index: 1.333; Upper limit for measurement ($\mu$m) = 2,000.00 $\mu$m; and Lower limit for measurement ($\mu$m) = 0.021 $\mu$m.

[Optional concentration]

The beverage according to the present invention may be either a non-concentrated beverage (i.e., straight beverage) or a concentrated beverage. The non-concentrated beverage herein refers to a beverage served as such (in straight) without dilution, while the concentrated beverage herein refers to a beverage served after diluted with water or other aqueous medium at a predetermined ratio before consumption. When the beverage according to the present invention is a non-concentrated beverage, then the composition of the beverage is adjusted such that the beverage itself satisfies each of the requirements mentioned above. On the other hand, when the beverage according to the present invention is a concentrated beverage, then the composition of the beverage is adjusted such that its diluted beverage for drinking satisfies each of the requirements mentioned above. When the beverage according to the present invention is a concentrated beverage, its concentration ratio (the ratio at which it should be diluted when consumed) is not limited, but may preferably be at least 2 times or higher. If the concentration ratio is less than the lower limit mentioned above, it may be difficult for consumers to convert the dilution ratio when drinking the product. On the other hand, the concentration ratio may preferably be 15 times or less, more preferably 12 or less. If the concentration ratio exceeds the upper limit mentioned above, the apple juice concentrates to be used may be too thick to retain aromatic components.

[Method for producing a beverage]

The method of producing the beverage according to the present invention is arbitrary and not particularly restricted. It may be produced by, for example, preparing apple cider vinegar and optionally mixing it with other optional ingredients, and adjusting the contents of the specific ingredients (2-methoxy-4-ethylphenol and diethyl succinate, and optionally 6-methyl-5-hepten-2-one) and optionally the contents of the specific sugars (fructose, glucose, and sucrose) in the mixture to within their respective predetermined ranges mentioned above. The mixture may optionally be subjected to a process such as micronization, etc., to adjust its physical properties so as to satisfy the features related to the particle size distribution mentioned above. The method of producing the beverage is also subject to the present invention.

[Method for adding matured taste/aroma to a beverage]

Another aspect of the present invention relates to a method of imparting a matured taste/aroma to a beverage containing apple cider vinegar, including adjusting the composition and physical properties of the beverage containing apple cider vinegar so as to satisfy the requirements for the beverage according to the present invention explained above. The details of the method are described above.

EXAMPLES

The present invention will now be described in further detail by way of Examples. These examples are shown merely for convenience of the description, and should not be construed as limitations to the present invention in any sense.

[Preparation of beverage samples]

Samples of Examples a0 to a13 and Comparative Examples b1 to b8 were prepared as beverage samples containing apple cider vinegar. The compositions of the beverage samples of Examples a0 to a13 and Comparative Examples b1 to b8 are shown in Tables 1 and 2 below.

[Table 1]

Table 1-1

| | | Apple cider vinegar | Clarified apple juice (equivalent to 7x concentration) | Unclarified apple juice (equivalent to 4x concentration) | Weight ratio of apple juice to apple cider vinegar |
|---|---|---|---|---|---|
| | | % (w/v) | % (w/v) | % (w/v) | Times |
| Example | a0 | 38.6 | 36.1 | 25.3 | 1.6 |
| Example | a1 | 3.9 | 3.6 | 2.5 | 1.6 |
| Example | a2 | 3.9 | 3.6 | 2.5 | 1.6 |
| Example | a3 | 1.4 | 1.3 | 0.9 | 1.6 |
| Example | a4 | 3.9 | 3.6 | 2.5 | 1.6 |
| Example | a5 | 1.9 | 3.6 | 2.5 | 3.2 |
| Example | a6 | 3.9 | 3.6 | 2.5 | 1.6 |
| Example | a7 | 3.9 | 3.6 | 2.5 | 1.6 |
| Example | a8 | 2.4 | 2.3 | 1.6 | 1.6 |
| Example | a9 | 3.9 | 3.6 | 2.5 | 1.6 |
| Example | a10 | 5.4 | 5.1 | 3.5 | 1.6 |
| Example | a11 | 3.9 | 3.6 | 2.5 | 1.6 |
| Example | a12 | 2.4 | 2.3 | 1.6 | 1.6 |
| Example | a13 | 1.9 | 3.6 | 2.5 | 3.2 |
| Comparative Example | b1 | 100.0 | 0.0 | 0.0 | 0.0 |
| Comparative Example | b2 | 100.0 | 0.0 | 0.0 | 0.0 |
| Comparative Example | b3 | 3.9 | 3.6 | 2.5 | 1.6 |
| Comparative Example | b4 | 1.3 | 1.2 | 0.8 | 1.6 |
| Comparative Example | b5 | 3.9 | 3.6 | 2.5 | 1.6 |
| Comparative Example | b6 | 3.9 | 3.6 | 2.5 | 1.6 |
| Comparative Example | b7 | 1.8 | 1.7 | 1.2 | 1.6 |
| Comparative Example | b8 | 1.8 | 1.7 | 1.2 | 1.6 |

Table 1-2

| | | Total content of apple cider vinegar and apple juice | Water | Other ingredients than apple cider vinegar, apple juice, and water | Concentration ratio |
|---|---|---|---|---|---|
| | | % (w/v) | % (w/v) | % (w/v) | Times |
| Example | a0 | 100 | 0 | 0.0 | 10 |
| Example | a1 | 10 | 90 | 0.0 | 1 |
| Example | a2 | 10 | 90 | 0.2 | 1 |
| Example | a3 | 4 | 96 | 0.0 | 1 |
| Example | a4 | 10 | 90 | 0.0 | 1 |
| Example | a5 | 8 | 92 | 0.3 | 1 |
| Example | a6 | 10 | 90 | 0.0 | 1 |
| Example | a7 | 10 | 89 | 1.0 | 1 |

(continued)

|  |  | Total content of apple cider vinegar and apple juice | Water | Other ingredients than apple cider vinegar, apple juice, and water | Concentration ratio |
|---|---|---|---|---|---|
|  |  | % (w/v) | % (w/v) | % (w/v) | Times |
| Example | a8 | 6 | 94 | 0.0 | 1 |
| Example | a9 | 10 | 90 | 0.0 | 1 |
| Example | a10 | 14 | 86 | 0.0 | 1 |
| Example | a11 | 10 | 88 | 2.4 | 1 |
| Example | a12 | 6 | 94 | 0.0 | 1 |
| Example | a13 | 8 | 92 | 0.3 | 1 |
| Comparative Example | b1 | 100 | 0 | 0.0 | 10 |
| Comparative Example | b2 | 100 | 0 | 0.0 | 10 |
| Comparative Example | b3 | 10 | 89 | 0.6 | 1 |
| Comparative Example | b4 | 3 | 95 | 1.2 | 1 |
| Comparative Example | b5 | 10 | 90 | 0.0 | 1 |
| Comparative Example | b6 | 10 | 90 | 0.0 | 1 |
| Comparative Example | b7 | 5 | 93 | 2.2 | 1 |
| Comparative Example | b8 | 5 | 93 | 2.2 | 1 |

[Table 2]

Table 2

|  |  | Added ingredients | | | | |
|---|---|---|---|---|---|---|
|  |  | Specific ingredients | | | Others | |
|  |  | 2-Methoxy-4-ethylphenol | Diethyl succinate | 6-Methyl-5-hepten-2-one | Acetic acid | Glucose |
|  |  | μg/L | μg/L | μg/L | %(w/v) | %(w/v) |
| Example | a0 |  |  |  |  |  |
| Example | a1 |  |  |  |  |  |
| Example | a2 |  |  |  | 0.24 |  |
| Example | a3 | 5.4 | 45.3 | 0.9 |  |  |
| Example | a4 | 41.7 |  |  |  |  |
| Example | a5 | 25 | 24.8 |  | 0.28 |  |
| Example | a6 | 41 | 429 |  |  |  |
| Example | a7 |  |  |  |  | 1 |
| Example | a8 | 5 | 16 |  |  |  |
| Example | a9 | 40 |  | 8.7 |  |  |
| Example | a10 |  |  |  |  |  |
| Example | a11 |  |  |  | 0.44 | 2 |
| Example | a12 |  | 16 | 4.5 |  |  |

(continued)

| | | Added ingredients | | | | |
| --- | --- | --- | --- | --- | --- | --- |
| | | Specific ingredients | | | Others | |
| | | 2-Methoxy-4-ethylphenol | Diethyl succinate | 6-Methyl-5-hepten-2-one | Acetic acid | Glucose |
| | | µg/L | µg/L | µg/L | %(w/v) | %(w/v) |
| Example | a13 | | 24.8 | | 0.28 | |
| Comparative Example | b1 | | | | | |
| Comparative Example | b2 | | | | | |
| Comparative Example | b3 | | | | 0.55 | |
| Comparative Example | b4 | 20 | 60 | 1.0 | | 1.2 |
| Comparative Example | b5 | 52 | | | | |
| Comparative Example | b6 | 30 | 450 | | | |
| Comparative Example | b7 | 30 | 20 | | 0.22 | 2 |
| Comparative Example | b8 | | 30 | | 0.22 | 2 |

The beverages of Examples a0 to a13 and Comparative Examples b1 to b8 were prepared as explained below.

*Apple cider vinegar and apple juice:

The apple cider vinegar and apple juices mentioned below were used for preparation of each of the beverage samples of Examples a0 to a13 and Comparative Example b3 to b8.
(A) Apple cider vinegar: Apple cider vinegar with an acetic acidity of 10% (w/v) was used. The vinegar was produced via a process complying with the regulations for cider vinegar prescribed in British Standard BS EN 13188:2000 2.3.3. After fermentation, the vinegar was used without filtration, i.e., with the acetic acid bacteria for fermentation process remaining in the vinegar.

(B) Apple juices: The following two types of apple juice were used. The pulp content in each apple juice was measured by the method described below.

(b1) Clarified apple juice: Prepared so as to have a Brix of 70 (equivalent to 7x concentration) after concentration and pulp removal steps. The pulp content in this juice was less than 0.1% (w/w) as measured by the method described below.
(b2) Non-clarified apple juice: Prepared so as to have a Brix of 40 (concentration equivalent to 4x concentration) with some pulp remaining after concentration. The juice was prepared to 0. The pulp content in this juice was 5% (w/w) as measured by the method described below.

(Measurement of pulp content)

The pulp content was measured as follows: 1.0 g of each juice concentrate was dispensed into a 1.5-mL Eppendorf tube, and centrifuged with a centrifuge (Kubota 3700 manufactured by Kubota Corporation) and a rotor (Kubota AF-2724 manufactured by Kubota Corporation) at 15,000 rpm for 5 minutes at room temperatures. The supernatant was removed, and the wet mass of the remaining solid was measured.

*Preparation of the sample of Example a0:

The beverage of Example a0 was prepared by mixing the apple cider vinegar and the apple juices (clarified apple juice and non-clarified apple juice) mentioned above at the proportions indicated in Table 1 above.

*Preparation of the samples of Comparative Examples b1 and b2:

The beverages of Comparative Examples b1and b2 were the following commercial products.

Comparative Example b1: Organic Apple Cider Vinegar (from Braggs)
Comparative Example b2: NATURAL UMBER ORGANIC APPLE CIDER VINEGAR, WITH MOTHER (from NATURAL UMBER)

*Preparation of the samples of Examples a1 to a13 and Comparative Examples b3 to b8:

The beverages of Examples a1 to a13 and Comparative Examples b3 to b8 were prepared by using the beverage of Example a0 as a basis, and adding thereto the specific ingredients (2-methoxy-4-ethyl phenol, diethyl succinate, and 6-methyl-5-hepten-2-one), glucose, acetic acid, and water at their respective ratios indicated in Tables 1 and 2 above.

The contents of the standard substances in each sample were adjusted by adding the following standard substances, which were each diluted with water to a concentration high enough not to affect the composition ratios of each sample (i.e., the aqueous solution of each standard substance accounts for less than 0.1% (w/v) of the total mass of the beverage). *2-Methoxy-4-ethyl phenol (from Tokyo Kasei Kogyo Co., Ltd., CAS No. 2785-89-9) *Diethyl succinate (from Wako Pure Chemical Industries, Ltd., CAS No. 123-25-1) *6-Methyl-5-hepten-2-one (from Tokyo Kasei Kogyo Co., Ltd., CAS No. 110-93-0)

[Analysis of beverage samples]

The composition and physical properties of each of the beverages in the Examples and Comparative Examples were measured by the methods explained below. For beverage concentrates with a concentration ratio of more than 1x, the measurement was performed after they were diluted with water to the equivalent of 1x.

*Measurement of acetic acid acidity:

The acetic acid acidity of each sample was measured with an automatic acidity titrator COM-1600 (Hiranuma Sangyo), by titrating the sample with 0.5 mol/L sodium hydroxide solution, and calculating the acidity from the amount of sodium hydroxide solution consumed to reach a pH of 8.2, using acetic acid as the reference for conversion.

*Measurement of turbidity:

The turbidity of each sample was measured by dispensing the sample into a square cell with a 10 mm optical path length, and measuring the absorbance at a wavelength of 660 nm with a UV-Vis-NIR spectrophotometer UV 1800 (Shimadzu Corp.). For beverage concentrates with a concentration ratio of more than 1x, the measurement was performed after they were diluted with water to the equivalent of 1x.

*Analysis of glucose, fructose, and sucrose contents:

For analysis of the various sugars, each sample was diluted with water so that the highest concentrations of glucose, fructose, and sucrose (specific sugars) in the samples were generally 1% (w/v) or less. The filtrate of the diluted sample through a 0.45 $\mu$m filter was used for HPLC measurements.

Measurement was performed using Prominence (Shimadzu Corp.) as the HPLC system, HILICpak VG-50 4E HPLC (Shodex) as the measuring column, 80% acetonitrile as the mobile phase, and a differential refractometer (Shodex RI-201H) for detection.

Fructose, glucose, and sucrose standards (all from Sigma-Aldrich) diluted with water were used as standards.

The measured values were converted according to the dilution ratio of each samples for determining the content of each sugar in each sample.

* Analysis of specific ingredients:

Determination of the contents of the specific ingredients, i.e., 2-methoxy-4-ethylphenol, diethyl succinate, and 6-methyl-5-hepten-2-one, in each sample was performed by treating the sample according to the SBME method and then subjecting it to the measurement using gas chromatography/mass spectrometry (GC/MS), specifically in the following manner.

First, a measurement sample was prepared from each of the beverage samples in the Examples and Comparative Examples by performing the following pretreatments 1 to 4 on the sample.

1. 10 mL was taken from each of the samples in the Examples and Comparative Examples. For beverage concentrates with a concentration ratio of more than 1x, they were diluted with water to the equivalent of 1x before 10 mL was taken.

2. A PDMS Twister (Gestel; 0.5 mm in thickness, 10 mm in length) was placed in the vial and agitated for 60 minutes to adsorb the components.

3. After 60 minutes, the filtrate was removed, and the PDMS Twister was rinsed with ion-exchanged water.

4. After rinsing, the water was wiped off with a Kim wipe, and the resulting sample was used as the sample for measurement.

The prepared samples were subjected to the measurement of the specific ingredients using a Gestel 1D2D switching GC/MS (GC section: HP7890 Series GC System coupled with LTM series II (both from Agilent), inlet: TDU2/CIS4 (Gestel), auto sampler: MPS (Gestel)).

With regard to capillary columns, DB-WAX (30 m in length, 250 μm i.d., 0.25 μm in film thickness, for use in LTM) (Agilent) was used as a one-dimensional column, and DB-5 (10 m in length, 180 μm i.d., 0.4 μm in membrane thickness, for used in LTM) (Agilent) was used as a two-dimensional column. Helium was used as a carrier gas.

Among the specific ingredients, 2-methoxy-4-ethylphenol and diethyl succinate were measured by one-dimensional analysis, while 6-methyl-5-hepten-2-one was measured by two-dimensional analysis.

Injection of specimens was performed using one PDMS Twister for each of the samples pretreated as mentioned above, under the injection conditions explained below.

*CIS4:

Maintained at 10°C for 0.5 minutes, then heated at 720°C/min to 240°C.

*TDU2:

Maintained at 30°C for 0.2 minutes, then heated at 720°C/min to 240°C.

For the measurement of 6-methyl-5-hepten-2-one, the sample was injected into the one-dimensional column under the injection conditions mentioned above, backflushing was performed during retention times of from 14.5 to 17.5 minutes, and the specific ingredients were then injected into the two-dimensional column for separation and subjected to SIM analysis. The column oven conditions for DB-WAX (one-dimensional column) and DB-5 (two-dimensional column) were as follows.

*DB-WAX (one-dimensional column):

Maintained at 40°C for 3 minutes, then heated at 5°C/min, and the measurement stopped 48 minutes after the beginning of the measurement.

*DB-5 (two-dimensional column):

Maintained at 40°C for 18 minutes, then heated at 10°C/min to 240°C, and maintained at 240°C for 10 minutes.

For the measurement of 2-methoxy-4-ethylphenol and diethyl succinate, the sample was injected into the one-dimensional column under the injection conditions mentioned above, separation was performed on the one-dimensional column, and the resulting data were subjected to SIM analysis. The column oven conditions for DB-WAX (one-dimensional column) were as follows.

*DB-WAX (one-dimensional column):

Maintained at 40°C for 3 minutes, then heated at 5°C/min to 240°C, and maintained at 240°C for 7 minutes.

Each specific ingredient content in each measured sample was measured using the selective ion monitoring (SIM) mode, and the concentration of each specific ingredient in the measured sample was calculated based on the area of the quantitation ions of the standard substance of the specific ingredient shown in Table 3 below, taking into account whether and how the sample was diluted with water.

[Table 3]

Table 3

|  | Quantitation ion | Confirmation ion 1 | Confirmation ion 2 |
|---|---|---|---|
| 2-Methoxy-4-ethylphenol | 137 | 152 | 122 |
| Diethyl succinate | 101 | 129 | 128 |
| 6-Methyl-5-hepten-2-one | 108 | 111 | 126 |

*Measurement for particle size distribution:

The particle size distribution of each sample in the Examples and Comparative Examples was measured using a Microtrac MT3300 EXII system, a laser diffraction particle size analyzer manufactured by Microtrac Bell. Water was used as the solvent for measurement, and the sample was subjected to sonication in the solvent before the measurement. DMS2 (Data Management System version 2, Microtrac Bell) was used as the measurement application software. For measurement, washing was performed by pressing the washing button in the measurement application software, zeroing was performed by pressing the Setzero button in the same software, and the sample was directly fed in until it reached the appropriate concentration range in the sample loading feature. After adjustment, ultrasonication was performed for 3 minutes by pressing the ultrasonication button in the software, with a frequency of 40 kHz and an output of 40 W, followed by de-aeration treatment three times. After sonication, the sample loading process was performed again to confirm that the concentration is in the proper range. Immediately thereafter, laser diffraction measurement was performed with a measurement time of 10 seconds at a flow velocity of 60%, and the obtained result was used as the measurement value. If the sample was too thin to complete the measurement, an evaporator was used to concentrate the sample before performing the analysis so as not to affect the particle size distribution.

The measurement conditions were set as follows: Distribution display: volume; Particle refractive index: 1.60; Solvent refractive index: 1.333; Upper limit for measurement ($\mu$m) = 2,000.00 $\mu$m; and Lower limit for measurement ($\mu$m) = 0.021 $\mu$m.

The accumulated 10% particle diameter (d10) and the accumulated 90% particle diameter (d90) were determined by using the particle diameters for each of the 132 measurement channels listed in Table 4 below as references, and determining the particle diameter of the channel in which the cumulated particle frequency reached 10% as the accumulated 10% particle diameter (d10) and the particle frequency of the channel in which the cumulated particle frequency reached 90% as the accumulated 90% particle diameter (d90). Specifically, the frequency of particles that were smaller than the particle diameter allocated for each channel and larger than the particle diameter allocated for the channel with one higher number (the lower limit of particle diameter for the largest channel in the measurement range) was measured for each channel, and the total frequency for all channels in the measurement range was used as the denominator to obtain the % particle frequency for each channel.

[Table 4]

Table 4

| Channel | Particle size ($\mu$m) | Channel | Particle size ($\mu$m) | Channel | Particle size ($\mu$m) | Channel | Particle size ($\mu$m) |
|---|---|---|---|---|---|---|---|
| 1 | 2000.000 | 37 | 88.000 | 73 | 3.889 | 109 | 0.172 |
| 2 | 1826.000 | 38 | 80.700 | 74 | 3.566 | 110 | 0.158 |
| 3 | 1674.000 | 39 | 74.000 | 75 | 3.270 | 111 | 0.145 |
| 4 | 1535.000 | 40 | 67.860 | 76 | 2.999 | 112 | 0.133 |
| 5 | 1408.000 | 41 | 62.230 | 77 | 2.750 | 113 | 0.122 |
| 6 | 1291.000 | 42 | 57.060 | 78 | 2.522 | 114 | 0.111 |
| 7 | 1184.000 | 43 | 52.330 | 79 | 2.312 | 115 | 0.102 |

(continued)

| Channel | Particle size (μm) | Channel | Particle size (μm) | Channel | Particle size (μm) | Channel | Particle size (μm) |
|---|---|---|---|---|---|---|---|
| 8 | 1086.000 | 44 | 47.980 | 80 | 2.121 | 116 | 0.094 |
| 9 | 995.600 | 45 | 44.000 | 81 | 1.945 | 117 | 0.086 |
| 10 | 913.000 | 46 | 40.350 | 82 | 1.783 | 118 | 0.079 |
| 11 | 837.200 | 47 | 37.000 | 83 | 1.635 | 119 | 0.072 |
| 12 | 767.700 | 48 | 33.930 | 84 | 1.499 | 120 | 0.066 |
| 13 | 704.000 | 49 | 31.110 | 85 | 1.375 | 121 | 0.061 |
| 14 | 645.600 | 50 | 28.530 | 86 | 1.261 | 122 | 0.056 |
| 15 | 592.000 | 51 | 26.160 | 87 | 1.156 | 123 | 0.051 |
| 16 | 542.900 | 52 | 23.990 | 88 | 1.060 | 124 | 0.047 |
| 17 | 497.800 | 53 | 22.000 | 89 | 0.972 | 125 | 0.043 |
| 18 | 456.500 | 54 | 20.170 | 90 | 0.892 | 126 | 0.039 |
| 19 | 418.600 | 55 | 18.500 | 91 | 0.818 | 127 | 0.036 |
| 20 | 383.900 | 56 | 16.960 | 92 | 0.750 | 128 | 0.033 |
| 21 | 352.000 | 57 | 15.560 | 93 | 0.688 | 129 | 0.030 |
| 22 | 322.800 | 58 | 14.270 | 94 | 0.630 | 130 | 0.028 |
| 23 | 296.000 | 59 | 13.080 | 95 | 0.578 | 131 | 0.026 |
| 24 | 271.400 | 60 | 12.000 | 96 | 0.530 | 132 | 0.023 |
| 25 | 248.900 | 61 | 11.000 | 97 | 0.486 | | |
| 26 | 228.200 | 62 | 10.090 | 98 | 0.446 | | |
| 27 | 209.300 | 63 | 9.250 | 99 | 0.409 | | |
| 28 | 191.900 | 64 | 8.482 | 100 | 0.375 | | |
| 29 | 176.000 | 65 | 7.778 | 101 | 0.344 | | |
| 30 | 161.400 | 66 | 7.133 | 102 | 0.315 | | |
| 31 | 148.000 | 67 | 6.541 | 103 | 0.289 | | |
| 32 | 135.700 | 68 | 5.998 | 104 | 0.265 | | |
| 33 | 124.500 | 69 | 5.500 | 105 | 0.243 | | |
| 34 | 114.100 | 70 | 5.044 | 106 | 0.223 | | |
| 35 | 104.700 | 71 | 4.625 | 107 | 0.204 | | |
| 36 | 95.960 | 72 | 4.241 | 108 | 0.187 | | |

*Analysis results:

The composition and physical properties of each of the beverages in the Examples and Comparative Examples analyzed by the procedures mentioned above are shown in Tables 5 and 6 below.

[Table 5]

Table 5-1

| | | Acetic acid acidity | Specific ingredients | | | | |
| | | | 2-Methoxy-4-ethyl-phenol | Diethyl succinate | y/x | 6-Methyl-5-hepten-2-one | x/(z·10) |
| | | $\alpha$ | x | y | | z | |
| | | % (w/v) | $\mu$g/L | $\mu$g/L | | $\mu$g/L | |
| Example | a0 | 0.56 | 8.3 | 70.5 | 8.4 | 1.3 | 0.7 |
| Example | a1 | 0.56 | 8.3 | 70.5 | 8.4 | 1.3 | 0.7 |
| Example | a2 | 0.80 | 8.3 | 70.5 | 8.4 | 1.3 | 0.7 |
| Example | a3 | 0.20 | 8.3 | 70.5 | 8.4 | 1.3 | 0.6 |
| Example | a4 | 0.56 | 50.0 | 70.5 | 1.4 | 1.3 | 4.0 |
| Example | a5 | 0.56 | 29.2 | 60.0 | 2.1 | 0.6 | 4.6 |
| Example | a6 | 0.56 | 49.3 | 499.5 | 10.1 | 1.3 | 3.9 |
| Example | a7 | 0.56 | 8.3 | 70.5 | 8.4 | 1.3 | 0.7 |
| Example | a8 | 0.35 | 10.2 | 60.0 | 5.9 | 0.8 | 1.3 |
| Example | a9 | 0.56 | 48.3 | 70.5 | 1.5 | 10.0 | 0.5 |
| Example | a10 | 0.78 | 11.7 | 98.6 | 8.4 | 1.8 | 0.7 |
| Example | a11 | 1.00 | 8.3 | 70.5 | 8.4 | 1.3 | 0.7 |
| Example | a12 | 0.35 | 5.2 | 60.0 | 11.5 | 5.3 | 0.1 |
| Example | a13 | 0.56 | 4.2 | 60.0 | 14.4 | 0.6 | 0.7 |
| Comparative Example | b1 | 0.52 | 3.5 | 53.4 | 15.1 | 0.5 | 0.7 |
| Comparative Example | b2 | 0.52 | 0.2 | 4.8 | 30.6 | 0.4 | 0.0 |
| Comparative Example | b3 | 1.11 | 8.3 | 70.5 | 8.4 | 1.3 | 0.7 |
| Comparative Example | b4 | 0.19 | 22.8 | 83.5 | 3.7 | 1.4 | 1.6 |
| Comparative Example | b5 | 0.56 | 60.3 | 70.5 | 1.2 | 1.3 | 4.8 |
| Comparative Example | b6 | 0.56 | 38.3 | 520.5 | 13.6 | 1.3 | 3.1 |
| Comparative Example | b7 | 0.49 | 34.0 | 53.6 | 1.6 | 0.6 | 5.7 |
| Comparative Example | b8 | 0.48 | 3.9 | 62.8 | 16.2 | 0.6 | 0.7 |

Table 5-2

| | | Specific sugars | | | | |
| | | Fructose | Glucose | Sucrose | Total sugar | $\beta/\alpha$ |
| | | | | | $\beta$ | |
| | | g/100ml | g/100ml | g/100ml | g/100ml | |
| Example | a0 | 2.35 | 1.07 | 0.59 | 4.0 | 7.2 |
| Example | a1 | 2.35 | 1.07 | 0.59 | 4.0 | 7.2 |
| Example | a2 | 2.35 | 1.07 | 0.59 | 4.0 | 5.0 |
| Example | a3 | 0.84 | 0.38 | 0.21 | 1.4 | 7.2 |
| Example | a4 | 2.35 | 1.07 | 0.59 | 4.0 | 7.2 |
| Example | a5 | 2.35 | 1.07 | 0.59 | 4.0 | 7.2 |
| Example | a6 | 2.35 | 1.07 | 0.59 | 4.0 | 7.2 |
| Example | a7 | 2.35 | 2.07 | 0.59 | 5.0 | 9.0 |

(continued)

| | | Specific sugars | | | | |
|---|---|---|---|---|---|---|
| | | Fructose | Glucose | Sucrose | Total sugar | β/α |
| | | | | | β | |
| | | g/100ml | g/100ml | g/100ml | g/100ml | |
| Example | a8 | 1.47 | 0.67 | 0.37 | 2.5 | 7.2 |
| Example | a9 | 2.35 | 1.07 | 0.59 | 4.0 | 7.2 |
| Example | a10 | 3.28 | 1.50 | 0.83 | 5.6 | 7.2 |
| Example | a11 | 2.35 | 3.07 | 0.59 | 6.0 | 6.0 |
| Example | a12 | 1.47 | 0.67 | 0.37 | 2.5 | 7.2 |
| Example | a13 | 2.35 | 1.07 | 0.59 | 4.0 | 7.2 |
| Comparative Example | b1 | n.d. | 0.01 | 0.01 | 0.0 | 0.0 |
| Comparative Example | b2 | 1.13 | 0.88 | 0.11 | 2.1 | 4.1 |
| Comparative Example | b3 | 2.35 | 1.07 | 0.59 | 4.0 | 3.6 |
| Comparative Example | b4 | 0.78 | 1.56 | 0.20 | 2.5 | 13.6 |
| Comparative Example | b5 | 2.35 | 1.07 | 0.59 | 4.0 | 7.2 |
| Comparative Example | b6 | 2.35 | 1.07 | 0.59 | 4.0 | 7.2 |
| Comparative Example | b7 | 1.12 | 2.51 | 0.28 | 3.9 | 8.0 |
| Comparative Example | b8 | 1.09 | 2.50 | 0.28 | 3.9 | 8.1 |

[Table 6]

Table 6

| | | Turbidity (OD660) | Particle size distribution | | |
|---|---|---|---|---|---|
| | | | d10 | d90 | d90/d10 |
| | | | μm | μm | |
| Example | a0 | 0.21 | 1.3 | 219 | 171 |
| Example | a1 | 0.21 | 1.3 | 219 | 171 |
| Example | a2 | 0.21 | 1.3 | 219 | 171 |
| Example | a3 | 0.07 | 1.3 | 219 | 171 |
| Example | a4 | 0.21 | 1.3 | 219 | 171 |
| Example | a5 | 0.21 | 1.0 | 203 | 213 |
| Example | a6 | 0.21 | 1.3 | 219 | 171 |
| Example | a7 | 0.21 | 1.3 | 219 | 171 |
| Example | a8 | 0.13 | 1.3 | 219 | 171 |
| Example | a9 | 0.21 | 1.3 | 219 | 171 |
| Example | a10 | 0.29 | 1.3 | 219 | 171 |
| Example | a11 | 0.21 | 1.3 | 219 | 171 |
| Example | a12 | 0.13 | 1.3 | 219 | 171 |
| Example | a13 | 0.21 | 1.0 | 203 | 213 |
| Comparative Example | b1 | 0.09 | 1.0 | 6 | 6 |

(continued)

| | | Turbidity (OD660) | Particle size distribution | | |
|---|---|---|---|---|---|
| | | | d10 | d90 | d90/d10 |
| | | | μm | μm | |
| Comparative Example | b2 | 0.03 | 0.7 | 3 | 4 |
| Comparative Example | b3 | 0.21 | 1.3 | 219 | 171 |
| Comparative Example | b4 | 0.07 | 1.3 | 219 | 171 |
| Comparative Example | b5 | 0.21 | 1.3 | 219 | 171 |
| Comparative Example | b6 | 0.21 | 1.3 | 219 | 171 |
| Comparative Example | b7 | 0.10 | 1.3 | 219 | 171 |
| Comparative Example | b8 | 0.10 | 1.3 | 219 | 171 |

[Sensory evaluation]

Each sample was evaluated under the following conditions. For beverage concentrates with a concentration ratio of more than 1x, the measurement was performed after they were diluted with water to the equivalent of 1x. Each evaluation was performed by four sensory inspectors who were trained as described below, and the average scores were rounded to the nearest whole number as resulting scores, which are listed in Table 7.

The sensory inspectors were selected from those who achieved excellent performance in the identification training described in A to C below, had experience in product development, had a lot of knowledge about food qualities such as taste and texture, and were capable of performing absolute evaluation for each sensory evaluation item.

A) Taste discrimination test: a total of seven samples were prepared, including five aqueous solutions prepared for five tastes (sweetness: taste of sugar; sourness: taste of tartaric acid; umami: taste of monosodium glutamate; saltiness; taste of sodium chloride; and bitterness: taste of caffeine), each with a concentration close to the threshold value of each component, and two sample solutions with distilled water, and the trainees were instructed to accurately identify the sample of each taste.

B) Concentration difference discrimination test: a series of five solutions with slightly different concentrations was prepared for each of salt and acetic acid, and the trainees were instructed to accurately distinguish the solutions of different concentrations for each component.

The sensory evaluation items were as follows.

*Matured taste/aroma:

5: Very favorable, with mellow fruit taste/aroma and sense of maturity strongly felt.
4: Favorable, with mellow fruit taste/aroma and sense of maturity felt.
3: Neutral, with mellow fruit taste/aroma and sense of maturity weakly felt.
2: Unfavorable, with mellow fruit taste/aroma and sense of maturity scarcely felt.
1: Very unfavorable, with mellow fruit taste/aroma and sense of maturity not felt.

*Alleviation of throat irritation caused by acetic acid:

5: Very favorable, with the refreshing acidity of acetic acid fully felt, while the throat irritation due to acetic acid sufficiently suppressed.
4: Favorable, with the refreshing acidity of acetic acid fully felt, while the throat irritation due to acetic acid suppressed.
3: Neutral, with the refreshing acidity of acetic acid fully felt, while the throat irritation due to acetic acid also felt.
2: Unfavorable, with the acidity of acetic acid felt, while the throat irritation due to acetic acid also considerably felt.
1: Very unfavorable, with the acidity of acetic acid felt, while the throat irritation due to acetic acid also strongly felt.

The results of the sensory evaluation are shown in Table 7 below. The scores in the table are the average of the four sensory inspectors' scores, rounded to one decimal place. The Examples generally satisfied the criteria with scores of 3 or more, while the Comparative Examples generally did not satisfy the criteria with scores of 2 or less.

[Table 7]

Table 7

| | | Sensory evaluation | |
|---|---|---|---|
| | | Mellow taste/aroma | Alleviation of throat irritation by acetic acid |
| | | Score | Score |
| Example | a0 | 5 | 5 |
| Example | a1 | 5 | 5 |
| Example | a2 | 4 | 3 |
| Example | a3 | 4 | 5 |
| Example | a4 | 3 | 5 |
| Example | a5 | 4 | 4 |
| Example | a6 | 3 | 5 |
| Example | a7 | 5 | 4 |
| Example | a8 | 5 | 3 |
| Example | a9 | 5 | 5 |
| Example | a10 | 5 | 5 |
| Example | a11 | 4 | 3 |
| Example | a12 | 4 | 3 |
| Example | a13 | 4 | 4 |
| Comparative Example | b1 | 2 | 2 |
| Comparative Example | b2 | 2 | 2 |
| Comparative Example | b3 | 2 | 1 |
| Comparative Example | b4 | 2 | (*) |
| Comparative Example | b5 | 1 | 2 |
| Comparative Example | b6 | 1 | 1 |
| Comparative Example | b7 | 1 | 2 |
| Comparative Example | b8 | 1 | 2 |

## INDUSTRIAL APPLICABILITY

The present invention is widely applicable to the field of beverages containing apple cider vinegar, and therefore has large utilization value.

## Claims

1. A beverage comprising apple cider vinegar, wherein

(a) the acetic acid acidity ($\alpha$), which is determined by the method described in the description, is from 0.20 % (w/v (g/ml)) to 1.0 % (w/v (g/ml));

(b) the content of 2-methoxy-4-ethyl phenol (x) is from 4 $\mu$g/L to 50 $\mu$g/L;
(c) the content of diethyl succinate (y) is from 60 $\mu$g/L to 500 $\mu$g/L; and
(d) the ratio of y/x is from 1 to 15,

wherein the apple cider vinegar is obtained from fermentation without any filtration process to remove acetic acid bacteria used in the fermentation.

2. The beverage according to claim 1, further comprising apple juice, wherein:
(e) the weight ratio of the apple juice to the apple cider vinegar is from 1.0 to 5.0.

3. The beverage according to claim 1 or 2, wherein:
(f) the content of 6-methyl-5-hepten-2-one (z) is from 0.5 $\mu$g/L to 10 $\mu$g/L.

4. The beverage according to any one of claims 1 to 3, wherein:
(g) the ratio of x/(z·10) is from 0.1 to 10.

5. The beverage according to any one of claims 1 to 4, wherein:

(h) the total content ($\beta$) of fructose, glucose, and sucrose is from 2.5g/100 mL to 6.0g/100 mL; and
(i) the ratio of $\beta/\alpha$ is from 5 to 12.

6. The beverage according to any one of claims 1 to 5, wherein:
(l) the turbidity represented by the absorbance at a wavelength of 660nm, which is measured at a concentration ratio of 1$\times$, in a square cell with a 10 mm optical path length with a UV-visible-near-infrared absorbance spectrophotometer, is from 0.1 to 0.5.

7. The beverage according to any one of claims 1 to 6, wherein:

(m) the accumulated 10% particle diameter (d10) of particles contained in the beverage is from 0.1 $\mu$m to 10 $\mu$m;
(n) the accumulated 90% particle diameter (d90) particles contained in the beverage is from 100 $\mu$m to 300 $\mu$m; and
(o) the ratio of d90/d10 is from 20 to 1000,
wherein d90 and d10 are determined by the method described in the description with a laser diffraction type particle size distribution measuring apparatus after introducing a sample using water as a measuring solvent and performing ultrasonication for 3 minutes with a frequency of 40 kHz and an output of 40 W, and using the measurement conditions of the particle refractive index of 1.60, solvent refractive index of 1.333, the measuring upper limit of 2,000.00 $\mu$m and the measuring lower limit of 0.021 $\mu$m.

8. A method of producing a beverage according to any one of claims 1 to 7, comprising adjusting contents and/or properties of a beverage comprising apple cider vinegar so as to satisfy the features of any one of claims 1 to 7.

**Patentansprüche**

1. Getränk, das Apfelweinessig umfasst, wobei

(a) der Essigsäure-Gehalt ($\alpha$), der durch das in der Beschreibung beschriebene Verfahren bestimmt wird, 0,20 % (Gew./Vol. (g/ml)) bis 1,0 % (Gew./Vol. (g/ml)) beträgt;
(b) der Gehalt von 2-Methoxy-4-ethylphenol (x) 4 $\mu$g/l bis 50 $\mu$g/l beträgt;
(c) der Gehalt von Diethylsuccinat (y) 60 $\mu$g/l bis 500 $\mu$g/l beträgt; und
(d) das Verhältnis y/x 1 bis 15 beträgt,

wobei der Apfelweinessig durch Fermentation ohne Filtrationsvorgang zum Entfernen von Essigsäurebakterien, die bei der Fermentation verwendet werden, erhalten wird.

2. Getränk nach Anspruch 1, das weiters Apfelsaft umfasst, wobei:
(e) das Gewichtsverhältnis zwischen dem Apfelsaft und dem Apfelweinessig 1,0 bis 5,0 beträgt.

**3.** Getränk nach Anspruch 1 oder 2, wobei:
(f) der Gehalt von 6-Methyl-5-heptein-2-on (z) 0,5 $\mu$g/l bis 10 $\mu$g/l beträgt.

**4.** Getränk nach einem der Ansprüche 1 bis 3, wobei:
(g) das Verhältnis x/(z·10) 0,1 bis 10 beträgt.

**5.** Getränk nach einem der Ansprüche 1 bis 4, wobei:

(h) der Gesamtgehalt ($\beta$) von Fructose, Glucose und Saccharose 2,5 g/100 ml bis 6,0 g/100 ml beträgt; und
(i) das Verhältnis $\beta/\alpha$ 5 bis 12 beträgt.

**6.** Getränk nach einem der Ansprüche 1 bis 5, wobei:
(i) die Trübheit, die durch das Absorptionsvermögen bei einer Wellenlänge von 660 nm dargestellt ist, die bei einem Konzentrationsverhältnis von 1x in einer quadratischen Zelle mit einer optischen Weglänge von 10 mm mit einem UV-Sichtbar-Nahinfrarot-Absorptionsspektralphotometer gemessen wird, 0,1 bis 0,5 beträgt.

**7.** Getränk nach einem der Ansprüche 1 bis 6, wobei:

(m) der akkumulierte 10-%-Teilchendurchmesser (d10) von Teilchen, die in dem Getränk enthalten sind, 0,1 $\mu$m bis 10 $\mu$m beträgt;
(n) der akkumulierte 90-%-Teilchendurchmesser (d90) von Teilchen, die in dem Getränk enthalten sind, 100 $\mu$m bis 300 $\mu$m beträgt;
(o) das Verhältnis d90/d10 20 bis 1.000 beträgt,
wobei d90 und d10 durch das in der Beschreibung beschriebene Verfahren mit einer Teilchengrößenverteilungs-Messvorrichtung vom Laserbeugungstyp nach dem Einbringen einer Probe unter Verwendung von Wasser als Mess-Lösungsmittel und Durchführen einer Ultraschallbestrahlung über 3 min mit einer Frequenz von 40 kHz und einer Leistung von 40 W und unter Verwendung der folgenden Messbedingungen bestimmt werden: eines Teilchen-Brechungsindex von 1,60, eines Lösungsmittel-Brechungsindex von 1,333, einer Obergrenze der Messung von 2.000,00 $\mu$m und einer Untergrenze der Messung von 0,021 mm.

**8.** Verfahren zur Herstellung eines Getränks nach einem der Ansprüche 1 bis 7, welches das Einstellen der Gehalte und/oder der Eigenschaften eines Getränks, das Apfelweinessig umfasst, um die Merkmale eines der Ansprüche 1 bis 7 zu erfüllen, umfasst.

**Revendications**

**1.** Boisson, comprenant du vinaigre de cidre de pomme, dans laquelle

(a) l'acidité d'acide acétique ($\alpha$), qui est déterminée par le procédé décrit dans la description, est de 0,20 % (p/v (g/ml)) à 1,0 % (p/v (g/ml)) ;
(b) la teneur en 2-méthoxy-4-éthylphénol (x) est de 4 $\mu$g/L à 50 $\mu$g/L ;
(c) la teneur en succinate de diéthyle (y) est de 60 $\mu$g/L à 500 $\mu$g/L ; et
(d) le rapport y/x est de 1 à 15,

dans laquelle le vinaigre de cidre de pomme est obtenu à partir d'une fermentation sans aucun processus de filtration pour éliminer les bactéries d'acide acétique utilisées dans la fermentation.

**2.** Boisson selon la revendication 1, comprenant en outre du jus de pomme, dans laquelle :
(e) le rapport en poids du jus de pomme au vinaigre de cidre de pomme est de 1,0 à 5,0.

**3.** Boisson selon la revendication 1 ou 2, dans laquelle :
(f) la teneur en 6-méthyl-5-heptèn-2-one (z) est de 0,5 $\mu$g/L à 10 $\mu$g/L.

**4.** Boisson selon l'une quelconque des revendications 1 à 3, dans laquelle :
(g) le rapport de x/(z•10) est de 0,1 à 10.

**5.** Boisson selon l'une quelconque des revendications 1 à 4, dans laquelle :

(h) la teneur totale ($\beta$) en fructose, glucose et saccharose est de 2,5 g/100 mL à 6,0 g/100 mL ; et
(i) le rapport $\beta/\alpha$ est de 5 à 12.

6. Boisson selon l'une quelconque des revendications 1 à 5, dans laquelle :
(1) la turbidité représentée par l'absorbance à une longueur d'onde de 660 nm, qui est mesurée à un rapport de concentration de 1x, dans une cellule carrée avec une longueur de trajet optique de 10 mm avec un spectrophotomètre d'absorbance UV-visible-infrarouge proche, est de 0,1 à 0,5.

7. Boisson selon l'une quelconque des revendications 1 à 6, dans laquelle :

(m) le diamètre de particules à 10 % accumulées (d10) de particules contenues dans la boisson est de 0,1 $\mu$m à 10 $\mu$m ;
(n) le diamètre de particules à 90 % accumulées (d90) de particules contenues dans la boisson est de 100 $\mu$m à 300 $\mu$m ; et
(o) le rapport de d90/d10 est de 20 à 1000,
dans laquelle d90 et d10 sont déterminés par le procédé décrit dans la description avec un appareil de mesure de distribution de taille de particules de type à diffraction laser après introduction d'un échantillon en utilisant de l'eau comme solvant de mesure et en effectuant une ultrasonification pendant 3 minutes avec une fréquence de 40 kHz et une sortie de 40 W, et en utilisant les conditions de mesure de l'indice de réfraction des particules de 1,60, de l'indice de réfraction du solvant de 1,333, de la limite supérieure de mesure de 2 000,00 $\mu$m et de la limite inférieure de mesure de 0,021 $\mu$m.

8. Procédé de production d'une boisson selon l'une quelconque des revendications 1 à 7, comprenant l'ajustement du contenu et/ou des propriétés d'une boisson comprenant du vinaigre de cidre de pomme de manière à satisfaire les caractéristiques de l'une quelconque des revendications 1 à 7.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- CN 109090390 A
- JP 2017184696 A
- JP 2009240299 A
- WO 2013011754 A1
- JP S62107781 A

### Non-patent literature cited in the description

- Apple Cider Vinegar With Apple Juice... Healthy Can Feel and Taste Good. *The Hourglass Life*, 20 March 2023, https://www.youtube.com/watch?v=iT-gyJrxMfzo
- **RODRIGUEZ MADRERA R et al.** Effect of cider maturation on the chemical and sensory characteristics of fresh cider spirits. *Food Research International*, 2010, vol. 43 (1), 70-78
- *4-ethyl guaiacol 2785-89-9*, 08 March 2023, https://web.archive.org/-web/20160320235255/http://www.thegoodscentscompany.com/data/r w1028451.html
- *CHEMICAL ABSTRACTS*, 2785-89-9
- *CHEMICAL ABSTRACTS*, 123-25-1
- *CHEMICAL ABSTRACTS*, 110-93-0